# EUROPEAN PATENT APPLICATION

(11) **EP 4 454 958 A1**
(43) Date of publication of application: **30.10.2024**
(21) Application number: 22910698.4
(22) Date of filing: 18.11.2022
(51) Int. Cl.: B60S 9/02, B66C 23/78, B66F 9/075, B66F 9/24

(54) **OVERTURN PREVENTION DEVICE AND CONVEYANCE DEVICE**

(30) Priority: 24.12.2021 JP 2021210953; 21.04.2022 JP 2022070401
(71) Applicant: Nabtesco Corporation, Tokyo 102-0093 (JP)
(72) Inventor: UCHIHARA, Masato, Tokyo 102-0093 (JP); NAKAI, Yuto, Tokyo 102-0093 (JP)
(74) Representative: Grünecker Patent- und Rechtsanwälte PartG mbB
(86) International application number: PCT/JP2022/042846
(87) International publication number: WO 2023/119980

(57) **Abstract**

An overturn prevention device (20) relating to an embodiment includes an overturn prevention arm (24) supported on a vehicle body (3) such that the overturn prevention arm (24) is rotatable on an axis of rotation (C3) extending in a top-bottom direction, the overturn prevention arm (24) being configured to prevent the vehicle body (3) from overturning. The overturn prevention arm (24) moves between a retracted state where the overturn prevention arm (24) is retracted into the vehicle body (3) and a used state where the overturn prevention arm (24) protrudes beyond the vehicle body (3).

## Description

### TECHNICAL FIELD

The present invention relates to an overturn prevention device and a conveyance device. This application is based on and claims the benefit of priority from Japanese Patent Applications Serial Nos. 2021-210953 (filed on December 24, 2021) and 2022-070401 (filed on April 21, 2022), the contents of which are incorporated herein.

### BACKGROUND

Conventionally known conveyance devices can transport objects by carrying them or transport working robots. To prevent such conveyance devices from overturning, various overturn prevention devices are proposed. For example, an overturn prevention device is disclosed that includes a linear actuator provided on a vehicle body (carriage), and a support member configured to be driven by the linear actuator to move toward a floor or away from the floor.

The support member stays away from the floor while the vehicle body is traveling. When the vehicle body stops moving to do work, on the other hand, the support member protrudes toward the floor. Here, the support member pushes the floor, which produces a reaction force to prevent the vehicle body from overturning. The overturn prevention devices of this type often project outward in the width direction of the conveyance device in order to reliably prevent the vehicle body from overturning.

### RELEVANT REFERENCE

### LIST OF RELEVANT PATENT LITERATURE

Patent Literature 1: Japanese Patent Application Publication No. 2006-53731

### SUMMARY

The above-described overturn prevention device may be included in conveyance devices that are to be used indoors (in factories). In this case, the overturn prevention device may interfere with the passages depending on their width. The conveyance devices may experience difficulties in traveling through the passages. This may disadvantageously restrict the conditions where the conveyance devices can be used.

The present invention provides an overturn prevention device and a conveyance device that can be used under eased restrictions.

An aspect of the present invention provides an overturn prevention device including an overturn prevention arm supported on a movable body such that the overturn prevention arm is rotatable on an axis of rotation extending in a top-bottom direction, the overturn prevention arm being configured to prevent the movable body from overturning. The overturn prevention arm moves between a retracted state where the overturn prevention arm is retracted into the movable body and a used state where the overturn prevention arm protrudes beyond the movable body.

The overturn prevention arm can be retracted into the movable body, so that the movable body can avoid having a large lateral width. Thus, the overturn prevention device does not obstruct the movement of the movable body. The movable body can be accordingly used under eased conditions. In the used state, the overturn prevention arm may be driven to rotate on the axis of rotation. As a result, the overturn prevention arm can sufficiently protrude outward in the width direction of the movable body. This can reliably prevent the movable body from overturning.

The axis of rotation extends in the top-bottom direction. This means that the overturn prevention arm can rotationally move in the horizontal direction. In an alternative case where the axis of rotation extends in the horizontal direction, the overturn prevention arm may rotationally move in the top-bottom direction. If such is the case, the overturn prevention arm needs to move against the gravitational force, for example, rise upward. This requires increased energy consumption to cause the overturn prevention arm to rotationally move. If the overturn prevention arm is configured to rotationally move in the horizontal direction, on the other hand, the rotational movement does not need to overcome the gravitational force. As a result, the overturn prevention arm can rotationally move with less energy consumption.

Another aspect of the present invention provides an overturn prevention device including an overturn prevention arm configured to move between a retracted state where the overturn prevention arm is retracted into a movable body and a used state where the overturn prevention arm protrudes beyond the movable body, the overturn prevention arm being configured to prevent the movable body from overturning. The overturn prevention arm includes: an arm configured to move between the retracted state and the used state; and a stopper provided on the arm, the stopper being configured to move from the arm toward a floor and move away from the floor.

The overturn prevention arm can be completely accommodated in the movable body. For example, if the stopper is configured not to move relative to the arm, this may make it difficult to completely accommodate the overturn prevention arm in the movable body when the arm is in the retracted state. This is because, when the arm is in the used state, the stopper needs to approach the floor to butt up against the floor. In the retracted state, on the other hand, the stopper needs to move away from the floor. This makes it difficult to completely accommodate the overturn prevention arm within the movable body. According to the aspect of the present invention, the arm is configured to move relative to the movable body and, at the same time, the stopper is configured to move relative to the arm. This allows the overturn prevention arm to be completely accommodated within the movable body. Thus, the overturn prevention device does not obstruct the movement of the movable body. The movable body can be accordingly used under eased conditions.

In the implementation, the overturn prevention device may include a driving unit configured to drive the overturn prevention arm to move between the retracted state and the used state.

Another aspect of the present invention provides a conveyance device including a vehicle body; a plurality of wheels configured to cause the vehicle body to travel; and an overturn prevention arm supported on the vehicle body such that the overturn prevention arm is rotatable on an axis of rotation extending in a top-bottom direction, the overturn prevention arm being configured to prevent the vehicle body from overturning. The overturn prevention arm is configured to move between a retracted state where the overturn prevention arm is retracted into the vehicle body and a used state where the overturn prevention arm protrudes beyond the vehicle body.

The overturn prevention device does not obstruct the movement of the vehicle body. The conveyance device can be accordingly used under eased conditions. The axis of rotation extends in the top-bottom direction. This means that the overturn prevention arm can rotationally move in the horizontal direction. The rotational movement of the overturn prevention arm does not need to overcome the gravitational force. As a result, the overturn prevention arm can rotationally move with less energy consumption.

Another aspect of the present invention provides a conveyance device including a vehicle body; a plurality of wheels configured to cause the vehicle body to travel; and an overturn prevention arm configured to move between a retracted state where the overturn prevention arm is retracted into the vehicle body and a used state where the overturn prevention arm protrudes beyond the vehicle body, the overturn prevention arm being configured to prevent the vehicle body from overturning. The overturn prevention arm includes: an arm configured to move between the retracted state and the used state; and a stopper provided on the arm, the stopper being configured to protrude from the arm toward a floor.

The overturn prevention arm can be completely accommodated in the movable body while reliably preventing the vehicle body from overturning. As a result, the overturn prevention device does not obstruct the traveling of the conveyance device. The conveyance device can be accordingly used under eased conditions.

Another aspect of the present invention provides a conveyance device including a vehicle body; one or more wheels configured to cause the vehicle body to travel; and an overturn prevention arm configured to move between a retracted state where the overturn prevention arm is retracted into a lateral portion of the vehicle body in a width direction and a used state where the overturn prevention arm protrudes beyond the lateral portion, the overturn prevention arm being configured to prevent the vehicle body from overturning. The overturn prevention arm is supported on the vehicle body such that the overturn prevention arm is rotatable on an axis of rotation extending in a top-bottom direction.

The overturn prevention device does not obstruct the movement of the vehicle body. The conveyance device can be accordingly used under eased conditions. The axis of rotation extends in the top-bottom direction. This means that the overturn prevention arm can rotationally move in the horizontal direction. The rotational movement of the overturn prevention arm does not need to overcome the gravitational force. As a result, the overturn prevention arm can rotationally move with less energy consumption.

This makes it easy to leave spaces in front of and behind the vehicle body where other objects such as a trailer vehicle can be placed. In a hypothetical case, the overturn prevention arm in the used state may protrude from the rear portion of the vehicle body. In this case, the region where the overturn prevention arm moves behind the vehicle body needs to be kept aside as a region where other objects are prohibited from being present when the conveyance device comes to stop. This problem also occurs if the overturn prevention arm protrudes from the front portion of the vehicle body. According to the aspect of the present invention, spaces are left in front of and behind the vehicle body where other objects can be placed. Therefore, the conveyance device can operate with little space being left between the front and rear portions of the vehicle body and other objects. As a consequence, the conveyance device can be used under eased conditions. The conveyance device is especially advantageous when used to pull other carriages since the other carriages can travel very close to the conveyance device.

Another aspect of the present invention provides a conveyance device including a vehicle body; one or more wheels configured to cause the vehicle body to travel; and an overturn prevention arm configured to move between a retracted state where the overturn prevention arm is retracted into a lateral portion of the vehicle body in a width direction and a used state where the overturn prevention arm protrudes beyond the lateral portion, the overturn prevention arm being configured to prevent the vehicle body from overturning. The overturn prevention arm includes: an arm configured to move between the retracted state and the used state; and a stopper provided on the arm, the stopper being configured to protrude from the arm toward a floor.

The overturn prevention arm can be completely accommodated in the vehicle body while reliably preventing the vehicle body from overturning. As a result, the overturn prevention device does not obstruct the traveling of the conveyance device. The conveyance device can be accordingly used under eased conditions.

In addition, this makes it easy to leave spaces in front of and behind the vehicle body where other objects such as a trailer vehicle can be placed. In a hypothetical case, the overturn prevention arm in the used state may protrude from the rear portion of the vehicle body. In this case, the region where the overturn prevention arm moves behind the vehicle body needs to be kept aside as a region where other objects are prohibited from being present when the conveyance device comes to stop. This problem also occurs if the overturn prevention arm protrudes from the front portion of the vehicle body. According to the aspect of the present invention, spaces are left in front of and behind the vehicle body where other objects can be placed. Therefore, the conveyance device can travel with little space being left between the front and rear portions of the vehicle body and other objects such as installed objects. As a consequence, the conveyance device can be used under eased conditions. The conveyance device is especially advantageous when used to pull other carriages since the other carriages can travel very close to the conveyance device.

In the implementations, the overturn prevention arm may be positioned outside of the wheels in the width direction.

In the implementations, the overturn prevention arm may be provided between the wheels and move between the retracted state and the used state between the wheels.

In the implementations, the conveyance device may include a driving unit configured to drive the overturn prevention arm to move between the retracted state and the used state.

In the implementations, the conveyance device may include a coupling part provided on at least one of a front portion or a rear portion of the vehicle body, the coupling part being configured to pull another vehicle.

### ADVANTAGEOUS EFFECTS

The above-described overturn prevention devices and conveyance devices can be used under eased conditions.

### BRIEF DESCRIPTION OF THE DRAWINGS

Fig. 1 is a perspective view showing a carriage relating to a first embodiment of the present invention.
Fig. 2 is an enlarged perspective view showing an overturn prevention device relating to the first embodiment of the present invention.
Fig. 3 is a perspective view showing the overturn prevention device relating to the first embodiment of the present invention with its cover being removed.
Fig. 4 is a perspective view showing a conveyance device relating to a second embodiment of the present invention.
Fig. 5 is a perspective view showing a conveyance device relating to a third embodiment of the present invention.

### DESCRIPTION OF THE PREFERRED EMBODIMENTS

The embodiments of the present invention will be hereinafter described with reference to the drawings.

### <First Embodiment>

### <Carriage>

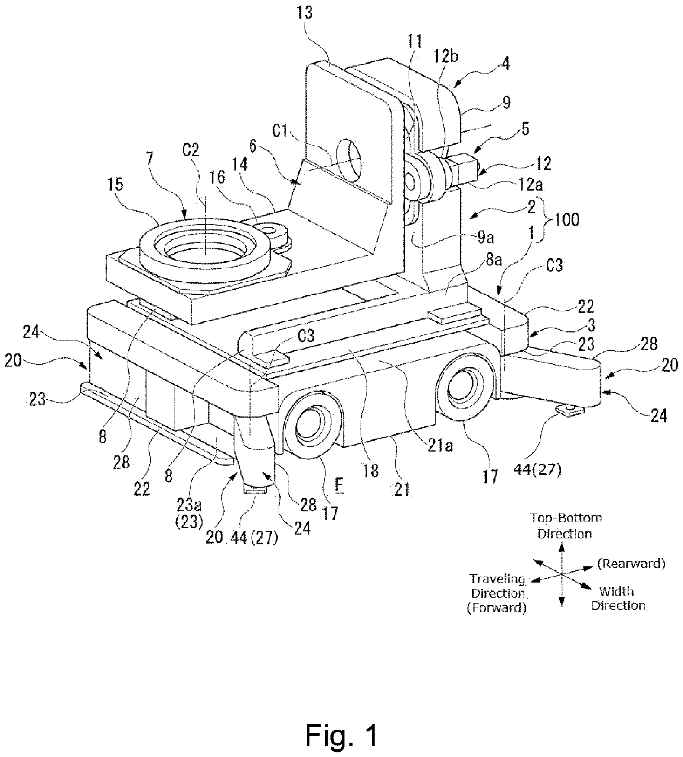

Fig. 1 is a perspective view showing a carriage 100 including a conveyance device 1. In the following description, the expression "traveling direction" or "front-rear direction" refers to the direction in which the carriage 100 runs. The expression "width direction" refers to the direction extending along the horizontal direction and orthogonal to the traveling direction. The expression "top-bottom direction" refers to the direction extending along the gravitational direction. The terms "upper" and "lower" refer to the upper and lower sides defined with the carriage 100 being placed on a floor F such that the carriage 100 can travel. As shown in Fig. 1, the carriage 100 includes a conveyance device 1, and a positioner 2 arranged on a vehicle body 3 constituting the conveyance device 1.

### <Positioner>

The positioner 2 is configured to hold and set a workpiece, which is not shown, in different directions. The positioner 2 includes a support part 4, an inclined arm driving unit 5 provided on the support part 4, an inclined arm 6 supported by the support part 4 via the inclined arm driving unit 5, and a rotatable table 7 provided on the inclined arm 6.

The support part 4 includes two base frames 8, and a column 9 rising from the two base frames 8. The two base frames 8 are shaped like a square pipe extending in the front-rear direction, for example. The shape of the base frames 8, however, is not limited to a square pipe and can be any of various shapes. The two base frames 8 extend in the front-rear direction and terminate at an end 8a on one side. The column 9 rises from the respective ends 8a of the two base frames 8. In the following description, the term "rear" refers to the side in the front-rear direction where the column 9 is arranged. The term "front" refers to the opposite side in the front-rear direction to the side where the column 9 is arranged. The inclined arm driving unit 5 is provided at the front surface 9a of the column 9.

The inclined arm driving unit 5 includes a disc part 11 supported by the front surface 9a of the column 9, and a reducer-equipped motor 12 provided on the column 9 on one side in the width direction. The disc part 11 is rotatably supported such that its axis of rotation C1 coincides with the front-rear direction. The reducer-equipped motor 12 includes an electric motor 12a and a reducer 12b. The electric motor 12a includes, for example, an electromagnetic brake, although not shown. The electromagnetic brake can apply a brake force to the electric motor 12a, specifically, its motor shaft, which is not shown. The motor shaft is coupled with the reducer 12b.

The reducer 12b may reduce the rotation input via the motor shaft and outputs the reduced rotation. The reducer 12b may be, for example, a so-called eccentric oscillating speed reducer that includes: crankshafts to be driven by the rotation of the motor shaft input thereto; and an external gear configured to oscillatorily rotate as the crankshafts rotate (the crankshafts and external gear are both not shown). The eccentric oscillating speed reducer can output rotation slower than the rotation of the motor shaft as its external gear oscillatorily rotates. The output rotation is transmitted to the disc part 11, so that the disc part 11 can rotate. The inclined arm 6 is provided on the front surface of the disc part 11.

The inclined arm 6 is L-shaped. The inclined arm 6 has a plate-shaped vertical wall 13 facing the disc part 11 and a plate-shaped arm body 14 extending forward from one of the surfaces of the vertical wall 13. The rotatable table 7 is provided on the arm body 14. The rotatable table 7 includes a table body 15 rotatably provided on the arm body 14, and a reducer-equipped motor 16 provided on a portion of the arm body 14 that corresponds to one of the sides of the table body 15.

The table body 15 has an axis of rotation C2 extending along the thickness direction of the arm body 14. On the table body 15, a workpiece is mounted although not shown. In this way, a workpiece can be held on the positioner 2. The reducer-equipped motor 16 is configured in the same manner as the reducer equipped motor 12 constituting the inclined arm driving unit 5. The rotation output from the reducer-equipped motor 16 is transmitted to the table body 15, so that the table body 15 can rotate. The two reducer-equipped motors 12 and 16 may not be configured in the same manner. They are only required to be serving as a drive source and capable of driving the corresponding devices.

As configured in the above-described manner, the positioner 2 can change the orientation of the workpiece 360 degrees by controlling the rotation of the inclined arm 6 and the rotation of the rotatable table 7.

### <Conveyance Device>

The conveyance device 1 includes a vehicle body 3, a plurality of wheels 17 provided on the vehicle body 3, and one or more overturn prevention devices 20 provided on the vehicle body 3. The vehicle body 3 includes a body 21, and frames 22 provided on the body 21 at the respective ends in the front-rear direction. The body 21 is shaped like a rectangular parallelepiped box that is slightly longer in the front-rear direction when seen in the top-bottom direction. The positioner 2 is provided on an upper surface 21 a of the body 21 with a base plate 18 being provided therebetween.

The wheels 17 are provided on the body 21 to face each other in the width and front-rear directions. The wheels 17 are driven and rotated by a running driving unit that is provided within the body 21, which is not shown. In this manner, the conveyance device 1 can travel. The running driving unit can be constituted by any of various power sources that can impart a driving force to the wheels 17, such as an electronic motor, a hydraulic motor and an engine.

The front and rear frames 22 are line-symmetrically arranged with respect to the body 21. Since the front and rear frames 22 are configured in the same manner, a single reference number is assigned to the two frames 22 in the following description. The frames 22 extend in the width direction entirely over the body 21 to entirely cover the front and rear ends of the body 21.

The front frame 22 has housing depressions 23 that are positioned on the opposite sides in the width direction. The two housing depressions 23 are open forward and outward in the width direction. The rear frame 22 has housing depressions 23 that are positioned on the opposite sides in the width direction. The two housing depressions 23 are open rearward and outward in the width direction. The overturn prevention devices 20 are provided at portions of the vehicle body 3 corresponding to the housing depressions 23 of the frames 22, in other words, the four corners of the vehicle body 3.

### <Overturn Prevention Device>

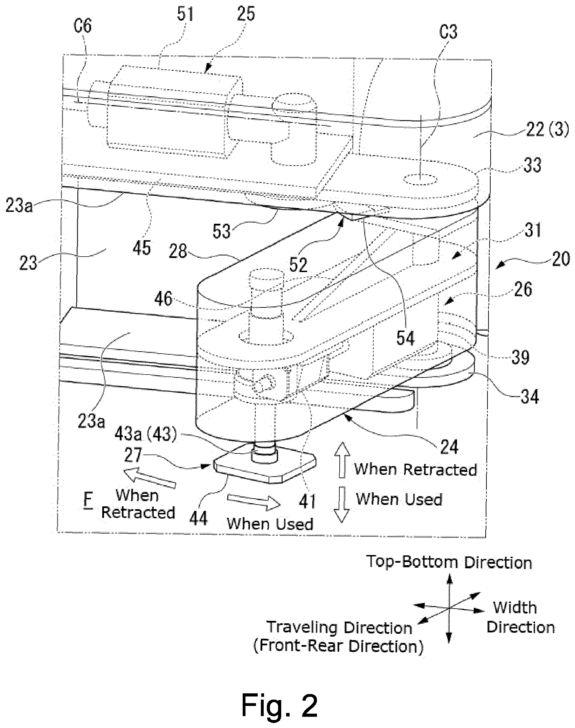

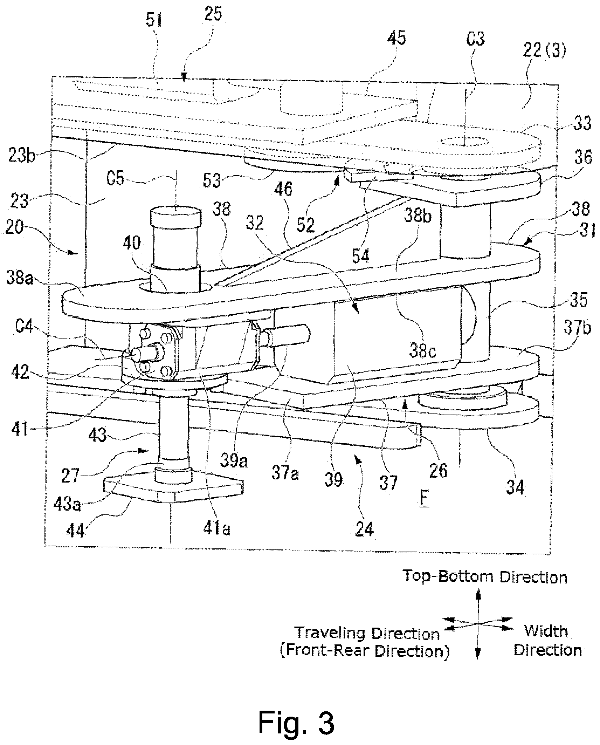

Fig. 2 is an enlarged perspective view of each overturn prevention device 20. Fig. 3 is a perspective view showing the overturn prevention device 20 with its cover 28 being removed. Fig. 3 corresponds to Fig. 2. Since the four overturn prevention devices 20 are all configured in the same manner, the following description only mentions one of the overturn prevention devices 20 and may discuss the other overturn prevention devices 20 as needed.

As shown in Figs. 1 to 3, the overturn prevention devices 20 are provided on the front and rear parts of the vehicle body 3. The overturn prevention devices 20 each include an overturn prevention arm 24 and an overturn prevention arm driving unit 25. The overturn prevention arm 24 is rotatably provided in a corresponding one of the housing depressions 23 of the frames 22, and the overturn prevention arm driving unit 25 is provided in the frames 22 above the corresponding housing depression 23. The overturn prevention arm 24 includes an arm 26, a stopper 27 provided on the arm 26, and a cover 28 externally covering part of the stopper 27 and arm 26.

The arm 26 includes an arm frame 31 and a stopper driving unit 32 supported by the arm frame 31. The arm frame 31 includes a support shaft 35 shaped like a circular column, that is rotatably supported by an upper support plate 33 provided on the overturn prevention arm driving unit 25 and a lower support plate 34 provided on a lower surface 23a of the housing depression 23. The upper and lower support plates 33 and 34 are arranged such that its thickness direction extends along the top-bottom direction and shaped like a rectangular plate that is long in the width direction when seen in the top-bottom direction. The upper and lower support plates 33 and 34 are arranged in the housing depression 23 relatively outside in the width direction.

The support plates 33 and 34 rotatably support the upper and lower ends of the support shaft 35. The support shaft 35 has an axis of rotation C3 extending along the top-bottom direction. The support shaft 35 has three base plates 36, 37 and 38 (first, second and third base plates 36, 37 and 38) integrated therewith, which are arranged at equal intervals in the direction extending along the axis of rotation C3. The three base plates 36, 37 and 38 may not need to be arranged at equal intervals. The support shaft 35 may not need to be constituted by the three base plates 36, 37 and 38. The support shaft 35 (or the base plates) can be configured in any manner as long as it can support the stopper driving unit 32.

The first base plate 36 is positioned near the upper end of the support shaft 35 and slightly lower than the upper support plate 33. The first base plate 36 is arranged such that its thickness direction extends along the top-bottom direction. When seen in the top-bottom direction, the size of the first base plate 36 may be greater than the outer diameter of the support shaft 35.

The second base plate 37 is positioned near the lower end of the support shaft 35 and slightly higher than the lower support plate 34. The second base plate 37 is arranged such that its thickness direction extends along the top-bottom direction. The second base plate 37 extends from the support shaft 35 in the horizontal direction. Specifically, the second base plate 37 is shaped like a rectangle that is long in one direction when seen in the top-bottom direction.

The third base plate 38 is positioned between the first and second base plates 36 and 37. The third base plate 38 is arranged such that its thickness direction extends along the top-bottom direction. The third base plate 38 extends from the support shaft 35 in the horizontal direction. Specifically, the third base plate 38 is shaped like a rectangle that is long in one direction when seen in the top-bottom direction. The extending direction of the third base plate 38 coincides with the extending direction of the second base plate 37. The length of the third base plate 38 is greater than that of the second base plate 37. Therefore, a distal end 38a of the third base plate 38 is more distant from the support shaft 35 than is a distal end 37a of the second base plate 37.

The third base plate 38 has a through hole 40 near the distal end 38a. The through hole 40 extends through the third base plate 38 in the thickness direction. The through hole 40 is penetrated by a slidable shaft 43 of the stopper 27, which will be described below. A rib 46 extends between the upper surface 38b of the third base plate 38 and the outer peripheral surface of the support shaft 35 to bridge them. The rib 46 is integrated with the upper surface 38b and the outer peripheral surface. The rib 46 terminates slightly before the through hole 40. The rib 46 serves as a reinforcement member for the arm frame 31.

The stopper driving unit 32 is provided between a lower surface 38c of the third base plate 38 and an upper surface 37b of the second base plate 37. The stopper driving unit 32 may apply power to the stopper 27. The stopper driving unit 32 includes an electric motor 39 serving as a drive source, and an actuator 41 mounted on a motor shaft 39a of the electric motor 39. The motor shaft 39a has an axis of rotation C4 extending along the horizontal direction. The drive source of the stopper driving unit 32 can be a hydraulic motor or the like, in place of the electric motor 39.

The actuator 41 may be a worm speed reducer mechanism, for example. The worm speed reducer can convert the rotational force of the motor shaft 39a into rotation on an axis of rotation C5 extending along the top-bottom direction. The rotation of the motor shaft 39a is transmitted to the stopper 27 via the actuator 41.

The stopper 27 includes a housing 42 retaining a nut (not shown) to which the rotation of the actuator 41 is transmitted, a slidable shaft 43 engaging with the nut, and a pedestal plate 44 mounted on the slidable shaft 43. The housing 42 is fixedly attached to a case 41 a of the actuator 41.

The slidable shaft 43 is a trapezoid screw, for example. The slidable shaft 43 extends along the axis of rotation C5, and is supported by the housing 42 via the nut, which is not shown. The slidable shaft 43 is supported such that it is restricted from turning on the axis of rotation C5. The upper portion of the slidable shaft 43 protrudes upwards beyond the third base plate 38 through the through hole 40 in the third base plate 38.

As the motor shaft 39a rotates, the slidable shaft 43 slides relative to the housing 42. More specifically, as the motor shaft 39a rotates, the slidable shaft 43 slides to move toward or away from the floor F. The pedestal plate 44 is attached to the lower end 43a of the slidable shaft 43 such that it can establish a surface contact with the floor F. The overturn prevention arm 24 configured in the above-described manner can be driven by the overturn prevention arm driving unit 25.

The overturn prevention arm driving unit 25 includes an electric motor 51 provided in the frame 22, and a transmission mechanism 52 for transmitting the rotational force of the electric motor 51 to the support shaft 35 of the overturn prevention arm 24. The electric motor 51 is provided on a support plate 45 that is placed in the frame 22 higher than the housing depression 23. The electric motor 51 has an axis of rotation C6 extending along the width direction.

The transmission mechanism 52 includes a spur gear 53 adjacently arranged to the upper surface 23b of the housing depression 23, and a sector gear 54 integrated with the support shaft 35 and engaging with the spur gear 53. Although not shown, the spur gear 53 has an integrated shaft that is coaxially arranged with the spur gear 53. The shaft is rotatably supported by the support plate 45. To the shaft of the spur gear 53, the rotation of the electric motor 51 is transmitted via a bevel gear or the like, which is not shown. As the electric motor 51 rotates, the spur gear 53 accordingly rotates. In addition, the sector gear 54, which engages with the spur gear 53, rotates.

As the sector gear 54 rotates, the support shaft 35, which is integrated with the sector gear 54, rotates. The rotation of the support shaft 35 causes the overturn prevention arm 24 to swing around the axis of rotation C3. As a result of the swinging, the overturn prevention arm 24 can move between a retracted state and a used state. In the retracted state, the overturn prevention arm 24 is completely accommodated in the housing depression 23. In the used state, the overturn prevention arm 24 protrudes beyond the housing depression 23 outwardly in the width direction of the conveyance device 1 and frontward or rearward obliquely with respect to the width direction. The following describes in detail the retracted and used states, specifically, how the overturn prevention device 20 works.

### <How Overturn Prevention Device Works>

Fig. 1 shows that the front left overturn prevention device 20 in the traveling direction is in the used state for the sake of easy understanding. On the other hand, Fig. 1 shows that the front right overturn prevention device 20 in the traveling direction is in the retracted state. Note that, however, the four overturn prevention devices 20 can be all in the same state or in different states from each other while being in operation.

The following first describes the used state. As shown in Figs. 1 to 3, the overturn prevention device 20 is driven to move to the used state if the carriage 100 (conveyance device 1) is stopped, for example, in order to use the positioner 2. To cause the overturn prevention device 20 to move from the retracted state to the used state, the overturn prevention arm driving unit 25 is first driven, so that the overturn prevention arm 24 can rotate on the axis of rotation C3 to extend outwardly in the width direction until it protrudes frontward or rearward obliquely with respect to the width direction. (see also the arrow in Fig. 2).

After this, the stopper driving unit 32 is driven, so that the slidable shaft 43 of the stopper 27 moves to protrude (to be elongated) downward. The pedestal plate 44 eventually butts up against the floor F (see also the arrow in Fig. 2). Now, the overturn prevention device 20 is in the used state. As the overturn prevention device 20 is in the used state, the carriage 100 can take stable posture even with the positioner 2 being in operation. The slidable shaft 43 pushes the floor F, which produces a reaction force to reliably prevent the carriage 100 from overturning.

The following next discusses the retracted state. As shown in Figs. 1 to 3, the overturn prevention device 20 remains in the retracted state while the carriage 100 is traveling. To cause the overturn prevention device 20 to move from the used state to the retracted state, the stopper driving unit 32 is first driven, so that the slidable shaft 43 can withdraw to move away from the floor F (see also the arrow in Fig. 2).

After this, the overturn prevention arm driving unit 25 is driven, so that the overturn prevention arm 24 can rotate on the axis of rotation C3 until it is accommodated in the housing depression 23 in the frame 22 (see also the arrow in Fig. 2). Now, the overturn prevention device 20 is in the retracted state. As in the retracted state, the overturn prevention device 20 can avoid protruding beyond the frame 22 in the front-rear direction or outward beyond the side surface of the vehicle body 3 in the width direction.

As described above, the overturn prevention device 20 includes the overturn prevention arm 24 that is rotatably supported on the conveyance device 1 such that the overturn prevention arm 24 is rotatable on the axis of rotation C3 extending in the top-bottom direction. The overturn prevention arm 24 can move between the retracted state and the used state. As discussed above, the overturn prevention arm 24 is retracted into the conveyance device 1. In this way, the overturn prevention arm 24 can avoid obstructing the traveling of the conveyance device 1. As a consequence, the carriage 100 can be used with eased limitations.

When the overturn prevention device 20 is in operation, the overturn prevention arm 24 can sufficiently project outward in the width direction of the conveyance device 1. In this manner, the carriage 100 (conveyance device 1) can be reliably prevented from overturning.

Here, the axis of rotation C3, on which the overturn prevention arm 24 can rotate, extends in the top-bottom direction. This means that the overturn prevention arm 24 can rotationally move in the horizontal direction. In an alternative case where the axis of rotation C3 extends in the horizontal direction, the overturn prevention arm 24 may rotationally move in the top-bottom direction. If such is the case, the overturn prevention arm 24 needs to move against the gravitational force, for example, rise upward. This requires increased energy consumption to cause the overturn prevention arm 24 to rotationally move. If the overturn prevention arm 24 is configured to rotationally move in the horizontal direction, on the other hand, the rotational movement does not need to overcome the gravitational force. As a result, the overturn prevention arm 24 can rotationally move with less energy consumption.

The overturn prevention arm 24 includes the arm 26 configured to move between the retracted and used states, and the stopper 27 (slidable shaft 43) provided on the arm 26. The stopper 27 (slidable shaft 43) moves toward the floor F from the arm 26 and away from the floor F. As discussed above, the overturn prevention arm 24 is driven in two phases of the arm 26 and stopper 27. This allows the overturn prevention arm 24 to be completely accommodated within the conveyance device 1.

For example, if the stopper 27 is configured not to move relative to the arm 26, this may make it difficult to completely accommodate the overturn prevention arm 24 in the conveyance device 1 when the arm 26 is in the retracted state. This is because, when the arm 26 is in the used state, the slidable shaft 43 (pedestal plate 44) needs to approach the floor F to butt up against the floor F. To cause the arm 26 to move to the retracted state, the slidable shaft 43 needs to move away from the floor F. For these reasons, it is difficult to move and completely accommodate the overturn prevention arm 24 in the conveyance device 1. According to the present embodiment, this issue is solved as the arm 26 can move relative to the conveyance device 1 and the slidable shaft 43 can move relative to the arm 26. As a result, the overturn prevention arm 24 can be completely accommodated in the conveyance device 1. The overturn prevention device 20 does not obstruct the traveling of the carriage 100 (transport 1). The carriage 100 can be accordingly used under eased conditions.

The overturn prevention device 20 includes the overturn prevention arm driving unit 25 and stopper driving unit 32. This allows the overturn prevention arm 24 to switch the state between the retracted state and the used state in a self-controlled manner. The overturn prevention device 20 can be used more conveniently.

To enable the overturn prevention arm 24 to operate in a self-controlled manner, a switch may be provided in any of the parts of the carriage 100. Operating the switch may control whether the overturn prevention arm 24 is in the retracted or used state. A control unit may be provided to perform overall control over the driving of the carriage 100. On reception of a traveling start signal (a signal to start the wheels 17), the control unit may drive the overturn prevention arm 24 into the retracted state. On reception of a start signal for the positioner 2 (a start signal for the reducer-equipped motors 12 and 16), the control unit may drive the overturn prevention arm 24 into the used state.

The overturn prevention devices 20 (overturn prevention arms 24) are provided on the vehicle body 3, two each on the frames 22 that are provided on the front and rear parts of the body 21. Specifically, the overturn prevention devices 20 (overturn prevention arms 24) are provided between the wheels 17 that face each other in the width direction. Therefore, the overturn prevention arms 24 can reliably prevent the vehicle body from overturning while the movement of the overturn prevention arms 24 is minimized. The overturn prevention arms 24 can be completely accommodated in the vehicle body 3.

The overturn prevention arms 24 may be provided on the upper part of the vehicle body 3. In this case, the overturn prevention devices 20 (overturn prevention arms 24) are positioned at a great distance from the floor F and are required to move significantly. The overturn prevention devices 20 protrude above the vehicle body 3. This may compromise the appearance of the conveyance device 1. The conveyance device 1 can benefit from better appearance by having the overturn prevention devices 20 (overturn prevention arms 24) inside the frames 22.

### <Second Embodiment>

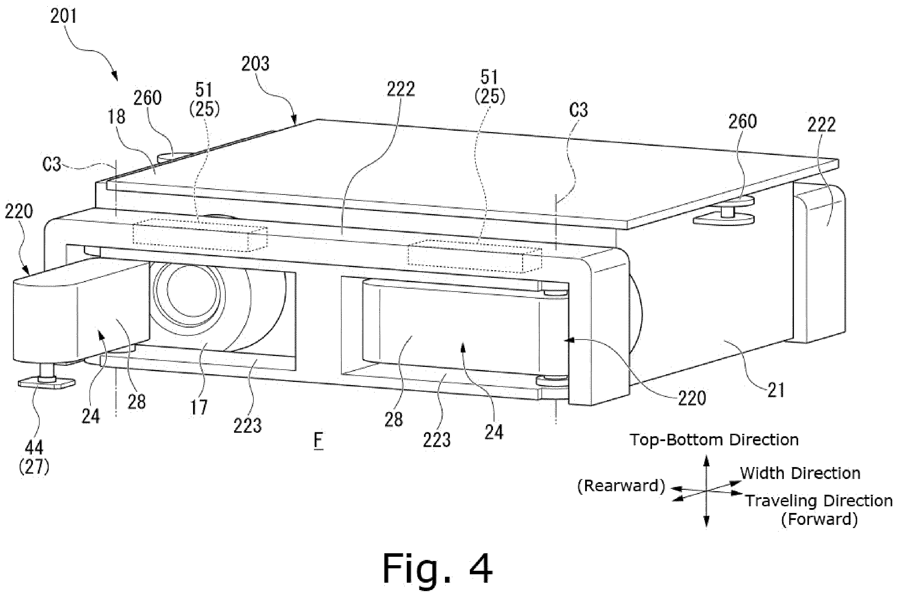

The following now describes a second embodiment of the present invention with reference to Fig. 4. Elements and components similar to those of the first embodiment are referred to using the same labels or referral numerals and description thereof will be omitted. Fig. 4 is a perspective view showing a conveyance device relating to the second embodiment of the present invention. As shown in Fig. 4, the second embodiment is different from the first embodiment in that overturn prevention devices 220 are arranged on a vehicle body 203 at its respective lateral portions that face each other in the width direction. A conveyance device 201 relating to the second embodiment constitutes a carriage when combined with the positioner 2 (see Fig. 1) provided on the vehicle body 203.

### <Conveyance Device>

The vehicle body 203 includes frames 222, in place of the frames 22 of the first embodiment. The frames 222 are provided on the vehicle body 203 at its respective lateral portions that face each other in the width direction. The frames 222 facing each other in the width direction are line-symmetrically arranged with respect to the body 21. Since the frames 222 are configured in the same manner, a single reference number is assigned to the two frames 222 in the following description.

The frames 222 extend in the front-rear direction over the entire body 21 to entirely cover the lateral portions of the body 21 that face each other in the width direction and to width-wise externally cover the front and rear wheels 17. The frames 222 each have one or more housing depressions 223. There are two housing depressions 223 arranged next to each other in the front-rear direction. The housing depressions 223 are open outward in the width direction. In the present embodiment, the housing depressions 223 extend through the frames 222 in the width direction to expose the wheels 17. In the frames 222, the electric motors 51 of the overturn prevention arm driving units 25 are provided above the housing depressions 223.

The vehicle body 203 has coupling parts 260 at the front and rear portions for pulling other vehicles. The other vehicles may include carriages without a drive source for traveling. The coupling parts 260 are coupled to the front and rear ends of the body 21. The coupling parts 260 may be alternatively provided at either or none of the front and rear portions of the vehicle body 203.

### <Overturn Prevention Device>

The overturn prevention arms 24 are provided in the housing depressions 223 in a one-to-one correspondence. The overturn prevention arms 24 are positioned outside the wheels 17 in the width direction. The overturn prevention arms 24 overlap the wheels 17 when seen in the width direction. The overturn prevention arms 24 are configured to swing around the axis of rotation C3. The axis of rotation C3 extends along the top-bottom direction. The axis of rotation C3 extends through each housing depression 223 at a site near the outer end in the front-rear direction. The outer end of each housing depression 223 in the front-rear direction is the distant one of the ends from the center of the conveyance device 201 in the front-rear direction. As the overturn prevention arms 24 swing around the axis of rotation C3, they can move between the retracted state and the used state. In the retracted state, each overturn prevention arm 24 is completely accommodated in the housing depression 223. In the used state, the overturn prevention arm 24 protrudes outward in the width direction beyond the frame 222. Fig. 4 shows that the rear overturn prevention device 220 in the traveling direction is in the used state for the sake of better understanding. In the used state, the overturn prevention arm 24 may protrude outwardly in the width direction and frontward or rearward obliquely with respect to the width direction.

The above-described second embodiment can produce the same advantageous effects as does the first embodiment. In addition, when used, the overturn prevention arms 24 protrude outwardly in the width direction beyond the frames 222 that are provided on the width-wise lateral portions of the vehicle body 203. This makes it easy to leave spaces in front of and behind the vehicle body 203 where other objects such as a trailer vehicle can be placed. In a hypothetical case, the overturn prevention arms in the used state may protrude from the rear portion of the vehicle body. In this case, the region where the overturn prevention arms move behind the vehicle body needs to be kept aside as a region where other objects are prohibited from being present when the conveyance device comes to stop. This problem also occurs if the overturn prevention arms protrude from the front portion of the vehicle body. In the second embodiment, however, spaces are left in front of and behind the vehicle body 203 where other objects can be placed. The conveyance device 201 relating to the present embodiment can thus travel with little space being left between the front and rear portions of the vehicle body 203 and other objects such as installed objects. As a consequence, the conveyance device 201 can be used under eased conditions.

Note that the conveyance device 201 has the coupling parts 260 at the front and rear portions of the vehicle body 203 for pulling other vehicles. In this way, other vehicles or trailer vehicles can be arranged near the conveyance device 201. As a consequence, even when pulling other vehicles, the conveyance device 201 can travel with a small turning radius difference. The conveyance device 201 can be thus used under eased conditions.

The overturn prevention arms 24 are positioned outside the wheels 17 in the width direction. The wheels 17 may compromise the layout of the overturn prevention arms 24, but the second embodiment can mitigate such a sacrifice. The overturn prevention arms 24 are thus allowed to have long arms, which can further stabilize the posture of the carriage.

### <Third Embodiment>

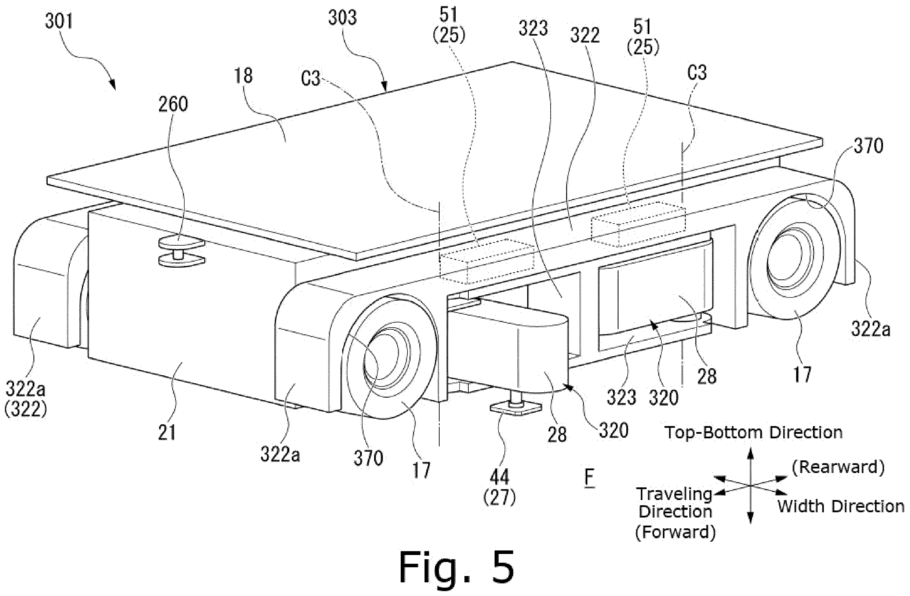

The following describes a third embodiment of the present invention with reference to Fig. 5. Elements and components similar to those of the second embodiment are referred to using the same labels or referral numerals and description thereof will be omitted. Fig. 5 is a perspective view showing a conveyance device relating to the third embodiment of the present invention. As shown in Fig. 5, the third embodiment is different from the second embodiment in that the overturn prevention arms 24 are arranged between the front and rear wheels 17. A conveyance device 301 relating to the third embodiment constitutes a carriage when combined with the positioner 2 (see Fig, 1) provided on a vehicle body 303, as in the second embodiment.

### <Conveyance Device>

The vehicle body 303 includes frames 322, in place of the frames 222 of the second embodiment. The frames 322 are provided on the vehicle body 303 at its respective lateral portions that face each other in the width direction. The frames 322 facing each other in the width direction are line-symmetrically arranged with respect to the body 21. Since the frames 322 are configured in the same manner, a single reference number is assigned to the two frames 322 in the following description.

The frames 322 extend in the front-rear direction over the entire body 21 to entirely and width-wise externally cover the lateral portions of the body 21 that face each other in the width direction. The frames 322 are at the same position as are the wheels 17 in the width direction, so that the frames 322 are aligned with the sets of front and rear wheels 17 when seen in the front-rear direction. The frames 322 each have one or more wheel housings 370 and one or more housing depressions 323. Specifically, a set of front and rear wheel housings 370 is provided for each set of front and rear wheels 17. As the wheels 17 are housed in the wheel housings 370, the frames 322 surround the wheels 17 from three of the directions, except for from below when seen in the width direction.

There are two housing depressions 323 arranged next to each other in the front-rear direction between the front and rear wheel housings 370. The housing depressions 323 are open outward in the width direction. The electric motors 51 of the overturn prevention arm driving units 25 are provided in the frames 322 above the housing depressions 323.

The frames 322 each include one or more bumpers 322a. The bumpers 322a are provided at the front and rear outer ends of each frame 322. The bumpers 322a externally cover the wheels 17 in the front-rear direction. The bumpers 322a protrude outward in the front-rear direction beyond the body 21 to form the front and rear ends of the conveyance device 301. The bumpers 322a may hold parts for unmanned traveling, such as a human sensor, an object sensor and a cushion.

### <Overturn Prevention Device>

The overturn prevention arms 24 are provided in the housing depressions 323 in a one-to-one correspondence. The overturn prevention arms 24 are arranged between the front and rear wheels 17 such that th overturn prevention arms 24 overlap the front and rear wheels 17 when seen in the front-rear direction. The overturn prevention arms 24 are configured to swing around the axis of rotation C3. The axis of rotation C3 extends along the top-bottom direction. The axis of rotation C3 extends through each housing depression 323 at a site near the outer end in the front-rear direction. As the overturn prevention arms 24 swing around the axis of rotation C3, they can move between the retracted state and the used state. In the retracted state, each overturn prevention arm 24 is completely accommodated in the housing depression 323. In the used state, the overturn prevention arm 24 protrudes outward in the width direction beyond the frame 322. Fig. 5 shows that the front overturn prevention device 20 in the traveling direction is in the used state for the sake of better understanding. In the used state, the overturn prevention arm 24 may protrude outwardly in the width direction and frontward or rearward obliquely with respect to the width direction.

The above-described third embodiment can produce the same advantageous effects as does the second embodiment. In addition, the overturn prevention arms 24 are arranged between the front and rear wheels 17 such that the overturn prevention arms 24 are aligned with the front and rear wheels 17 when seen in the front-rear direction. This means that the overturn prevention arms 24 do not protrude frontward or rearward beyond the front and rear wheels 17. For this reason, the bumpers 322a, which may be made from different materials than the overturn prevention arms 24, can be provided at the front and rear ends of the conveyance device 301.

The overturn prevention arms 24 can be accommodated between the front and rear wheels 17. If the overturn prevention arms 24 are provided at the respective lateral portions of the vehicle body 303 facing each other in the width direction, the conveyance device 301 may inevitably have a large size in the width direction. The third embodiment can reduce such an increase in size.

The embodiments described herein are not intended to necessarily limit the present invention to any specific embodiments. Various modifications can be made to these embodiments without departing from the true scope and spirit of the present invention. According to the above-described embodiments, the overturn prevention devices 20 are provided in the conveyance devices 1, 201, and 301 constituting the carriage 100. The present invention, however, is not limited to such, and the overturn prevention devices 20, 220 and 320 can be used in various types of movable bodies (mobile robots and the like). The overturn prevention devices 20 may be used not only in movable bodies having a drive source for traveling and but also in carriages having no drive source for traveling. For example, trailer vehicles may have the overturn prevention devices 220 and 320. In this case, the overturn prevention devices 220 and 320 may be arranged on the lateral portions of the vehicle body of the trailer vehicles facing each other in the width direction.

According to the above-described embodiments, the conveyance device 1 may travel only in one direction (the front-rear direction). The present invention, however, is not limited to such, and the conveyance device 1 may be configured to travel in all directions. For example, the wheels may be omni-wheels or mecanum wheels. In this way, the conveyance device 1 can travel in all directions.

According to the above-described embodiments, the actuator 41 may be a worm speed reducer mechanism, for example. Referring to the foregoing description, the stopper 27 is constituted by a trapezoid screw (slidable shaft 43) and a nut. The present invention, however, is not limited to such. Various types of linear motors can be used to convert the rotational movement of the electric motor 39 and the like into linear movement in order to cause the slidable shaft 43 to slide. For example, the actuator 41 may be a rack and pinion, or the like in place of a worm speed reducer mechanism.

According to the first embodiment described above, the overturn prevention devices 20 (overturn prevention arms 24) are provide on the vehicle body 3, two each on the frames 22 that are provided on the front and rear parts of the body 21. Specifically, the overturn prevention devices 20 (overturn prevention arms 24) are provided between the wheels 17 that are provided at the opposite sides in the width direction. The present invention, however, is not limited to such. Alternatively, the overturn prevention devices 20 (overturn prevention arms 24) are provided between the wheels 17 that are provided at the opposite sides in the front-rear direction.

The number of overturn prevention devices 20 is not limited to four but may be any desired value. For example, the conveyance device 1 (carriage 100) may always overturn toward a specific direction. In this case, the overturn prevention devices 20 may be provided only at a position corresponding to the specific direction.

According to the above-described embodiments, each overturn prevention device 20 includes the overturn prevention arm 24 that is rotatably supported on the conveyance device 1 such that the overturn prevention arm 24 is rotatable on the axis of rotation C3 extending in the top-bottom direction and also includes the stopper 27 (slidable shaft 43) configured to move from the arm 26 of the overturn prevention arm 24 toward the floor F and move away from the floor F. The present invention, however, is not limited to such. The overturn prevention device 20 may at least include the overturn prevention arm 24 that is rotatably supported such that the overturn prevention arm 24 is rotatable on the axis of rotation C3.

The overturn prevention device 20 may not be necessarily configured to be rotatable on the axis of rotation C3. If not, the overturn prevention arm 24 of the overturn prevention device 20 may be only required to have the arm 26 configured to move between the retracted state and the used state, and the stopper 27 (slidable shaft 43) that is provided on the arm 26 and configured to move from the arm 26 toward the floor F and move away from the floor F. In this case, the arm 26 is configured to slide relative to the vehicle body 3 (frame 22), so that the arm 26 can move between the retracted state and the used state.

According to the above-described embodiments, the electric motors 51 of the overturn prevention arm driving units 25 are provided in the upper portion of the frames 22, 222 and 322. The present invention, however, is not limited to such. The electric motors may be provided in the frames at any position between the overturn prevention arms 24.

The coupling parts 260 configured to pull other vehicles may be provided on the front or rear portion of the conveyance device 1 relating to the first embodiment. In this case, the frames 22 may be made rigid enough to be capable of pulling other vehicles via the coupling parts 260 and the coupling parts 260 are provided on the frames 22. Alternatively, the coupling parts 260 may be provided on the base plate 18. According to the above-described second and third embodiments, the coupling parts 260 are separately provided from the overturn prevention arms 24. However, the overturn prevention arms 24, which are configured to protrude outward in the width direction, may be also used as the coupling parts. If such is the case, the conveyance device and the other vehicles can travel side by side.

The foregoing embodiments disclosed herein describe a plurality of physically separate constituent parts. They may be combined into a single part, and any one of them may be divided into a plurality of physically separate constituent parts. As long as it is configured such that the purpose of the invention can be achieved, such components may be integrated or separately provided.

### INDUSTRIAL APPLICABILITY

The above-described overturn prevention devices and conveyance devices can be used under eased conditions.

### LIST OF REFERENCE NUMBERS

1, 201, 301 conveyance device (movable body)
3, 203, 303 vehicle body (movable body)
17 wheel
20, 220, 320 overturn prevention device
22, 222, 322 frame (vehicle body)
24 overturn prevention arm
25 overturn prevention arm driving unit (driving unit)
26 arm
27 stopper
32 stopper driving unit (driving unit)
100 carriage (movable body)
222, 322 frame (lateral portion in the width direction)
260 coupling part
C3 axis of rotation

## Claims

1. An overturn prevention device comprising
an overturn prevention arm supported on a movable body such that the overturn prevention arm is rotatable on an axis of rotation extending in a top-bottom direction, the overturn prevention arm being configured to prevent the movable body from overturning,
wherein the overturn prevention arm moves between a retracted state where the overturn prevention arm is retracted into the movable body and a used state where the overturn prevention arm protrudes beyond the movable body.

2. An overturn prevention device comprising
an overturn prevention arm configured to move between a retracted state where the overturn prevention arm is retracted into a movable body and a used state where the overturn prevention arm protrudes beyond the movable body, the overturn prevention arm being configured to prevent the movable body from overturning,
wherein the overturn prevention arm includes:
an arm configured to move between the retracted state and the used state; and
a stopper provided on the arm, the stopper being configured to move from the arm toward a floor and move away from the floor.

3. The overturn prevention device of claim 1 or 2, comprising
a driving unit configured to drive the overturn prevention arm to move between the retracted state and the used state.

4. A conveyance device comprising:
a vehicle body;
a plurality of wheels configured to cause the vehicle body to travel; and
an overturn prevention arm supported on the vehicle body such that the overturn prevention arm is rotatable on an axis of rotation extending in a top-bottom direction, the overturn prevention arm being configured to prevent the vehicle body from overturning,
wherein the overturn prevention arm is configured to move between a retracted state where the overturn prevention arm is retracted into the vehicle body and a used state where the overturn prevention arm protrudes beyond the vehicle body.

5. A conveyance device comprising:
a vehicle body;
a plurality of wheels configured to cause the vehicle body to travel; and
an overturn prevention arm configured to move between a retracted state where the overturn prevention arm is retracted into the vehicle body and a used state where the overturn prevention arm protrudes beyond the vehicle body, the overturn prevention arm being configured to prevent the vehicle body from overturning,
wherein the overturn prevention arm includes:
an arm configured to move between the retracted state and the used state; and
a stopper provided on the arm, the stopper being configured to protrude from the arm toward a floor.

6. A conveyance device comprising:
a vehicle body;
one or more wheels configured to cause the vehicle body to travel; and
an overturn prevention arm configured to move between a retracted state where the overturn prevention arm is retracted into a lateral portion of the vehicle body in a width direction and a used state where the overturn prevention arm protrudes beyond the lateral portion, the overturn prevention arm being configured to prevent the vehicle body from overturning,
wherein the overturn prevention arm is supported on the vehicle body such that the overturn prevention arm is rotatable on an axis of rotation extending in a top-bottom direction.

7. A conveyance device comprising:
a vehicle body;
one or more wheels configured to cause the vehicle body to travel; and
an overturn prevention arm configured to move between a retracted state where the overturn prevention arm is retracted into a lateral portion of the vehicle body in a width direction and a used state where the overturn prevention arm protrudes beyond the lateral portion, the overturn prevention arm being configured to prevent the vehicle body from overturning,
wherein the overturn prevention arm includes:
an arm configured to move between the retracted state and the used state; and
a stopper provided on the arm, the stopper being configured to protrude from the arm toward a floor.

8. The conveyance device of claim 6 or 7, wherein the overturn prevention arm is positioned outside of the wheels in the width direction.

9. The conveyance device of any one of claims 4 to 7, wherein the overturn prevention arm is provided between the wheels and moves between the retracted state and the used state between the wheels.

10. The conveyance device of any one of claims 4 to 7, comprising
a driving unit configured to drive the overturn prevention arm to move between the retracted state and the used state.

11. The conveyance device of any one of claims 4 to 7, comprising
a coupling part provided on at least one of a front portion or a rear portion of the vehicle body, the coupling part being configured to pull another vehicle.
